# EUROPEAN PATENT SPECIFICATION

(11) **EP 3 679 611 B1**
(45) Date of publication and mention of the grant of the patent: **26.03.2025**
(21) Application number: 18769425.2
(22) Date of filing: 04.09.2018
(51) Int. Cl.: H01M 50/213

(54) **MOUNTING SYSTEM FOR BATTERY CELLS**
BEFESTIGUNGSSYSTEM FÜR BATTERIEZELLEN
SYSTÈME DE MONTAGE POUR ÉLÉMENTS DE BATTERIE

(30) Priority: 04.09.2017 GB 201714116
(43) Date of publication of application: 15.07.2020
(73) Proprietor: Delta Cosworth Limited, Northampton, Northamptonshire NN12 8GX (GB)
(72) Inventor: CARPENTER, Nicholas, Northampton Northamptonshire NN12 8GX (GB); ACKLAM, Alexander, Northampton Northamptonshire NN12 8GX (GB)
(74) Representative: Gray, James
(86) International application number: PCT/GB2018/052497
(87) International publication number: WO 2019/043413

(56) References cited:
- EP-A1- 2 722 909
- US-A1- 2010 330 404
- US-A1- 2015 111 082

## Description

The present invention relates to a mounting system for cylindrical battery cells. More specifically, though not exclusively, the present invention relates to a mounting system for battery cells for battery electric and hybrid electric vehicles. The present invention may also be utilised for non-vehicle applications, for example static electrical power storage.

Battery electric (BEV) and hybrid-electric (HEV) vehicles require significant electrical energy storage if they are to become usable by the broader population. In parallel with the development of cell chemistries that will give higher power and higher energy capability, the configuration of the "non-cell" components and systems should be optimised, thus reducing the mass and packaging impact to vehicles during the switch to electrical energy storage.

Small format cylindrical battery cells (e.g. 18650, 26650 or 21700 format cells) have some disadvantages, particularly the large quantity required to achieve high capacity. This leads to a large number of mechanical and electrical connections, and complex containment strategies.

Such small format cells also have significant advantages, such as the packaging adaptability and the flexibility to achieve the required system voltage and capacity by choosing the size of the "parallel" groups and the length of the "series strings" to give the desired configuration.

It has been observed that each supplier's manufacturing process drives differing tolerances into these "standard" formats, such that an 18650 cell that should nominally be 18.0mm diameter and 65.0mm long may in reality be a slightly different length or diameter.

There is a desire for a cell mounting system that maintains the flexibility offered by the choice of small-format cylindrical cells whilst also decreasing the "overhead" associated with their use, giving a smaller, lighter and less expensive solution for their containment into a battery pack.

Very limited prior art exists for the application of these smaller-format cylindrical cells into batteries of large capacity, with the most relevant being that of Tesla Inc. That application uses an 18650 cell within a "sandwich" type construction of mouldings above and below. It does not allow for the degree of flexibility required (within the detail of the cell support) if cells from a range of manufacturers are to be accommodated. An example of a Tesla Inc. battery support arrangement may be found in, for example, EP1880433. The documents US2015111082, EP2722909 and US2010330404 disclose modular battery carriers.

According to the present invention there is provided a carrier element for a plurality of cylindrical battery cells, the carrier element comprising a base and at least one upstanding wall located on an edge of the base; said at least one wall extending generally perpendicularly with respect to the base; wherein the base is provided with a plurality of open bottomed wells each configured to receive a single cylindrical battery cell, wherein each well is provided with first and second resilient alignment means arranged to bias a cell located within a well in mutually perpendicular directions.

The alignment means, in use, act to locate a battery cell within a well. The battery cell is both axially and radially located within the well, and thus manufacturing tolerances in the battery cell dimensions can be compensated for. The alignment means can also compensate for differences between the battery cell dimensions of different manufacturers products. The open bottom of each well permits access, in use to the anode or cathode of a battery cell. The alignment means are non-conductive and thus do not form electrical connections with battery cells received within the open bottomed wells.

The first resilient alignment means may be arranged to bias a cell in a direction substantially perpendicular to the plane of the base, and the second resilient alignment means may be arranged to bias a cell in a direction substantially parallel to the plane of the base.

The first resilient alignment means may be formed integrally with the carrier element. In one embodiment of the invention the first resilient alignment means may comprise a sprung finger located within the open bottom of the well. More preferably the first resilient alignment means may comprise a plurality of sprung fingers located within the open bottom of the well. The or each sprung finger may include a contact projection which in use, contacts an end of a cell located within the well. In one embodiment of the invention, each well is provided with two sprung fingers which are positioned on opposing sides of the open bottom of the well. In such an embodiment it will be understood that the fingers, in use, contact radially outer region of the end of a cylindrical battery cell. It will thus be appreciated that the radially inner region of the end of the cylindrical battery cell, corresponding to the positive or negative terminals of the battery, are readily accessible and not covered or occluded by the fingers.

The second resilient alignment means may be formed integrally with the carrier element. More specifically the second resilient alignment means may comprise a sprung finger located at the side of the well. More preferably second resilient alignment means may comprise a plurality of sprung fingers located at the side of the well. The or each sprung finger may include a contact projection which in use, contacts a side of a cell located within the well.

The carrier element may be provided with formations configured to permit the adjacent connection of like carrier elements. Multiple carrier elements may thus be connected together in order to accommodate a desired number of battery cells.

The formations may include a barbed projection of a well of the carrier element and a complementary engagement surface of another well of the carrier element. The barbed projection is preferably resilient.

The formations may further include interengageable projections and recesses of the base of the carrier element. More specifically the projections and recesses of the base may have a dovetail configuration.

The formations may further include interengageable projections and recesses of the walls of the carrier element.

The base of the carrier element may include an aperture configured to receive a thermistor and thermistor wiring there through. The base may further include a projection for the mounting of a thermistor. Such a projection may be positioned between adjacent wells of the base.

The ends of the walls which are distal to the base are preferably configured to engage walls of a like carrier element when said like carrier element is inverted and mated to the carrier element. In such an embodiment one of the walls may be provided with a ledge against which a wall of an inverted carrier element can abut, in use.

The carrier element may be of unitary construction and formed from plastic by injection moulding.

According to another aspect of the present invention there is provided a carrier for a plurality of cylindrical battery cells, the carrier comprising first and second carrier elements as described above wherein the first and second carrier elements are arranged such that the distal ends of the walls of the carriers abut one another.

The distal ends of the walls of the first and second carrier elements may at least partially overlap.

According to another aspect of the present invention there is provided a battery arrangement comprising a carrier as described above and a plurality of cylindrical battery cells, wherein the cylindrical battery cells are located between opposing wells of the first and second carrier elements.

The first and second carrier elements are preferably fixed to one another in a non-separable manner. The first and second carrier elements are preferably connected to one another at the overlap of the walls, for example by welding. The walls may be provided with recesses configured to receive welding apparatus for the purpose of welding the first and second carrier elements to one another.

The battery arrangement may optionally be provided with a battery cooling arrangement. Such a battery cooling arrangement may comprise at least one flexible bladder passing around at least some of the battery cells, said bladder being in fluid communication with manifold means provided at opposing ends of the bladder. In an alternative embodiment cell cooling may be achieved by the circulation of air between the cells.

The battery arrangement may further include electrical connection means which overlie the bases of the first and second carrier elements and contact the ends of the battery cells through the open bottoms of the wells. The electrical connection means may comprise a substantially planar electrically conductive member having a plurality of sprung projections which, in use, are aligned with and extend into the open bottoms of the battery cell wells.

The invention gives a very flexible approach to the support of small-format cylindrical cells whereby they can be used in virtually any series-parallel arrangement and a module containing the cells can be used in any orientation (horizontal or vertical), whether actively cooled (air or liquid) or not.

This invention specifically allows for the assembly of multiple cylindrical cells into a common carrier, whereas much of the prior art found describes carrier mouldings for a single cell (which is wasteful of time in assembly, space and weight).

Embodiments of the present invention will now be described with reference to the accompanying figures in which:
Figure 1 shows a perspective view of a battery carrier element according to an embodiment of the present invention;
Figure 2 shows an enlarged view of a portion of the element of figure 1;
Figure 3 shows a cross-sectional view of the element of figure 1;
Figures 4 and 5 show perspective views of two battery mounting elements both before and after connection to one another;
Figure 6 shows an enlarged view of a portion of the connected elements of figure 5;
Figures 7 and 8 show detail views of the manner in which the elements are connected;
Figures 9 and 10 show further detail views of the manner in which the elements are connected;
Figures 11 to 13 show further detail views of the manner in which the elements are connected;
Figure 14 shows a perspective view of a plurality of connected battery mounting elements;
Figure 15 shows a perspective view of the connected elements of figure 14 with end pieces;
Figures 16 and 17 show a perspective view of the connected elements and a plurality of cylindrical cells;
Figures 18 and 19 show the connected elements and cells together with a cooling arrangement;
Figure 20 shows the plurality of connected elements and cells, and a further set of connected elements;
Figure 21 shows the further set of connected elements fitted to the connected elements and cells;
Figure 22 shows an end view of the elements and cells of figure 21;
Figure 23 shows a perspective view of the elements and cells of figure 21;
Figures 24 and 25 show an enlarged views of the connection between the respective sets of connected elements;
Figures 26 and 27 show perspective views of bus bar used to electrically connect the cells;
Figures 28 to 30 show detail views of the manner in which the bus bars are connected to the elements;
Figures 31 and 32 show detail views relating to the location of temperature probes;
Figures 33 and 34 show perspective views of the end pieces of figure 15;
Figures 35 and 36 show perspective views of a battery carrier element according to a further embodiment of the present invention;
Figures 37 and 38 show perspective views of a connection feature of the battery carrier elements of figures 35 and 36;
Figure 39 shows a perspective view of a plurality of connected battery carrier elements and battery cells;
Figure 40 shows the connected carrier elements and cells of figure 39 together with a cooling arrangement;
Figure 41 shows a perspective view of a portion of the cooling arrangement;
Figure 42 shows a perspective view of a carrier element end piece;
Figure 43 shows a perspective view of a connection made between the cooling arrangement and the carrier element end piece;
Figure 44 shows a perspective view of portion of the carrier element end piece;
Figures 45 and 46 show the fitting of the end piece to a mounting post;
Figures 47 to 49 show the fitting of a nut to the end piece;
Figures 50 to 54 show perspective views of manner in which walls of opposing carrier elements interengage when the carrier elements are fitted together;
Figure 55 shows a perspective view of mounting posts provided on the base of a battery carrier element;
Figures 56 and 57 show the connection of a bus bar to the mounting posts;
Figure 58 shows a perspective view of a wall of a battery carrier element;
Figure 59 shows a perspective view of a base of the battery carrier element; and
Figures 60 and 61 show perspective views of carrier element end pieces.

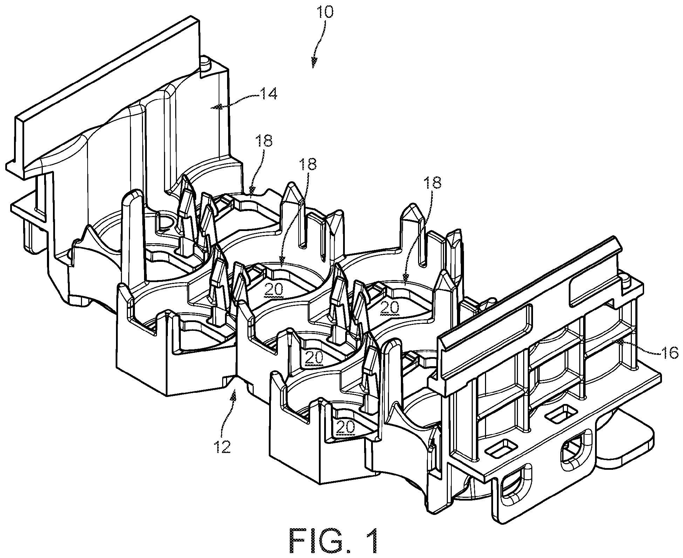

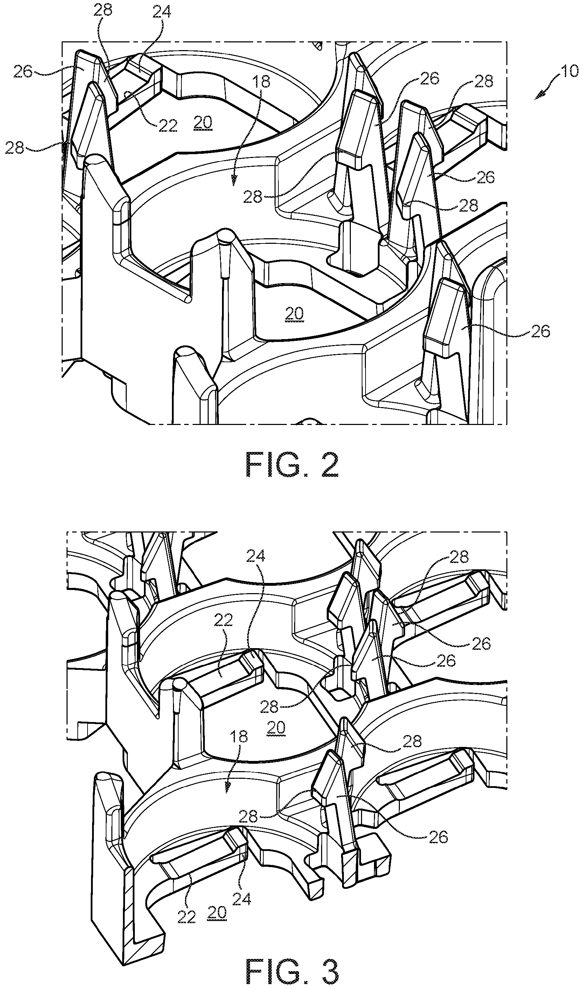

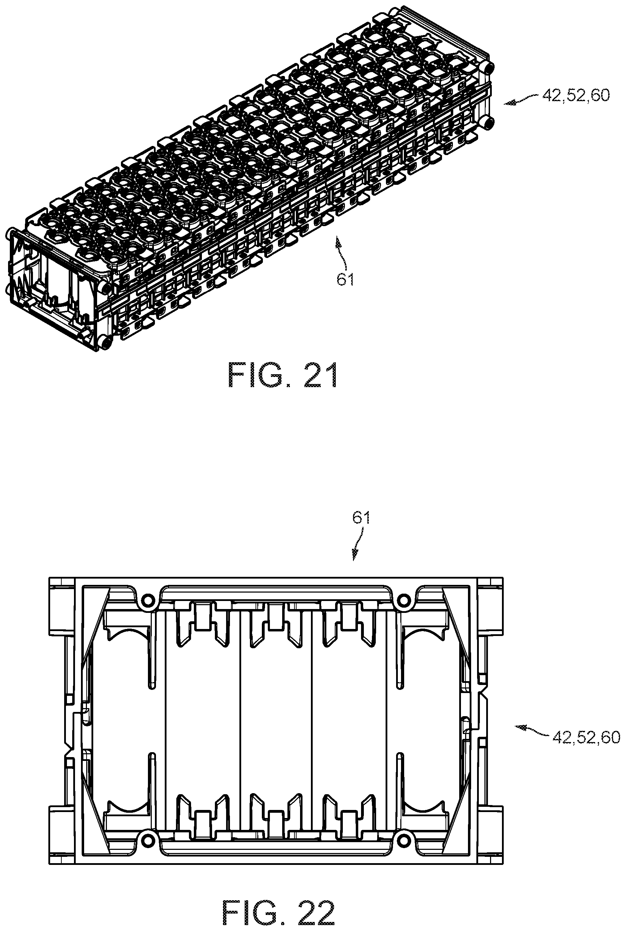

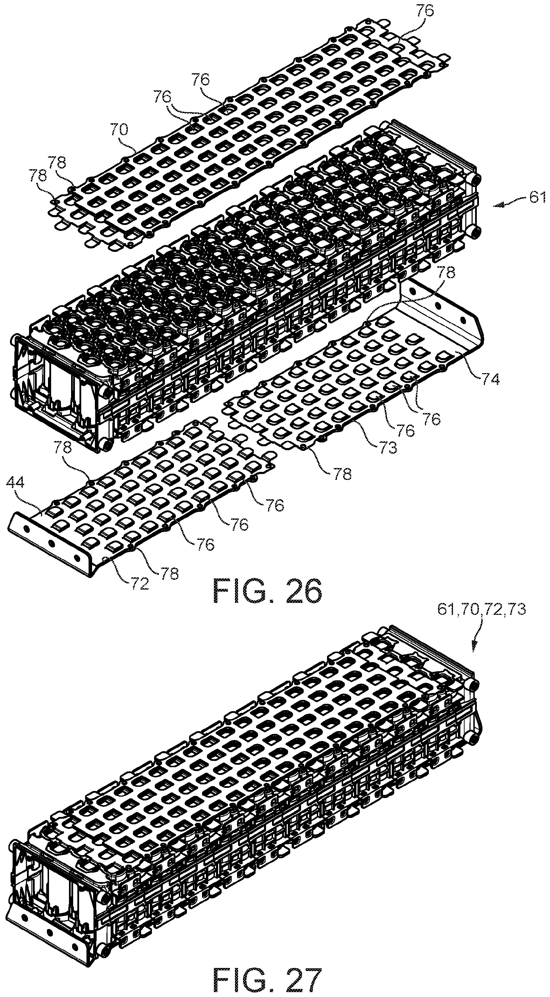

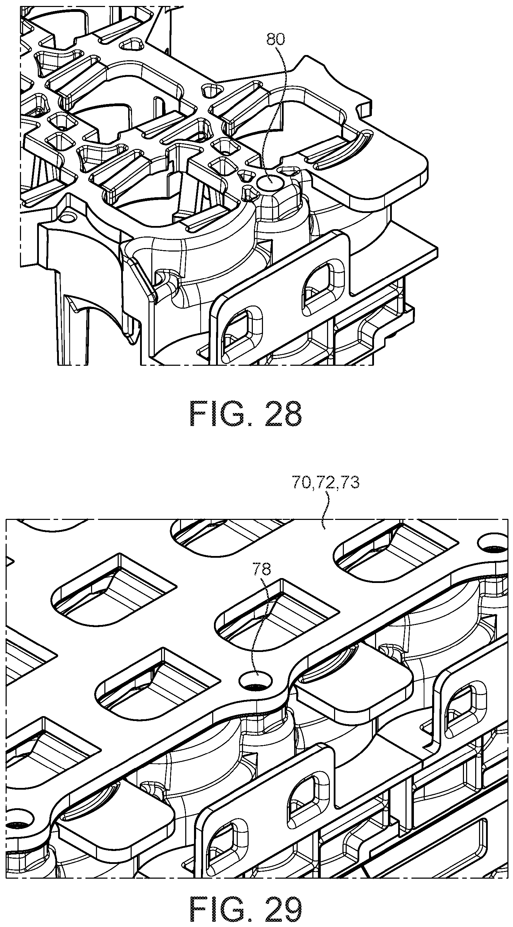

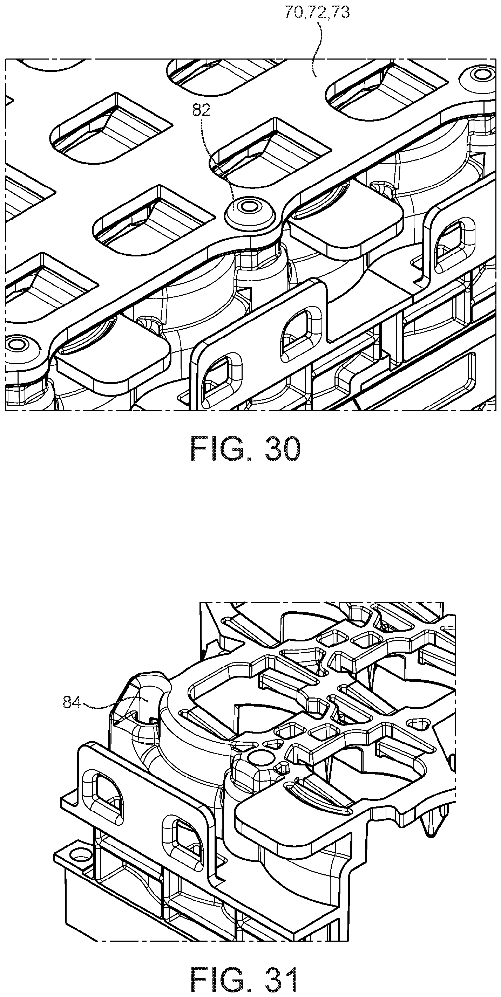

Referring firstly to figures 1 to 34 there is shown a carrier element generally designated 10. The carrier element 10 includes a generally planar base 12 and opposing side walls 14,16 which extend substantially perpendicularly from the plane of the base 12.

The base 12 is provided with a plurality of wells 18 into which, in use, cylindrical battery cells are receivable. In the embodiment shown the carrier element 10 is provided with ten wells 18 which are arranged in a 5 cell by 2 row array. The carrier 10 is thus able to accommodate ten battery cells. The adjacent pairs of wells 18 are offset so as to minimise the space required for the ten cells. It will be appreciated that the 5 cell by 2 row array is shown by way of illustrative example only and alternative layouts for the wells 18 are possible. For example, the carrier element 10 may be provided with a 3 cell by 2 row array, a 4 cell by 2 row array or a 5 cell by 3 row array.

The wells 18 are open bottomed and include an aperture 20 which allows access to the interior of a well 18 from the opposing side of the base 12.

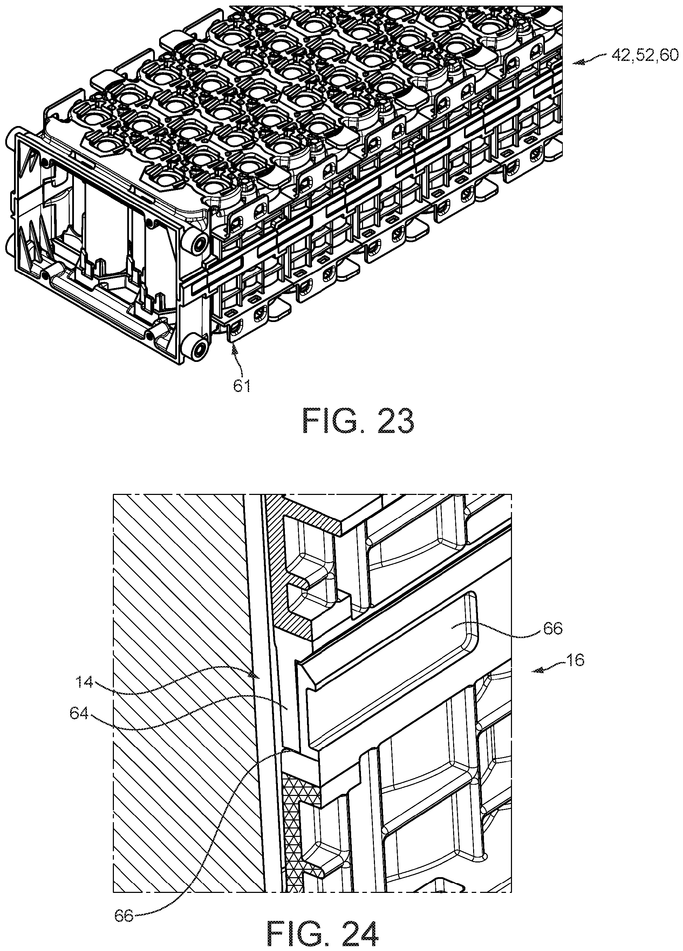

Each well 18 is provided with a first alignment means comprising pair of fingers 22 which extend at least partially across the aperture 20 of the well 18 from opposing sides of the aperture 20 of the well. Each finger 22 is inclined with respect to the plane of the base 12 and into the well 18. Each finger 22 is provided, at the end which is distal to the side of the well 18 from which the finger 22 projects, with a projection 24. The projections 24 are, in use, positioned to contact the end of a battery cell located within the well 18. The spacing of the fingers 22 is such that, in use, the projections 24 contact the radially outer region of the end of the battery cell and thus leave the radially inner region of the end of the battery cell freely accessible. This can be readily seen in, for example, figure 23.

Each well 18 is further provided with a second alignment means comprising a second pair of fingers 26 which extend in a direction substantially perpendicular to the plane of the base 12. Each second finger 26 is provided with a projection 28 which, in use, are positioned to contact the side of a battery cell located within the well 18.

In the embodiment described in the figures the carrier element 10 is of a unitary construction and may be formed from plastic, for example, by injection moulding. In an alternative embodiment, the carrier 10 may be of a multipart construction that requires assembly. In such an embodiment the base 12 may be separate from the walls 14,16 and the carrier element 10 may thus require assembly before the fitment of battery cells thereto. The base 12 and walls 14,16 may be formed from plastic by a moulding operation. Assembly may require connection of the base 12 and walls 14,16 by, for example, adhesive or welding.

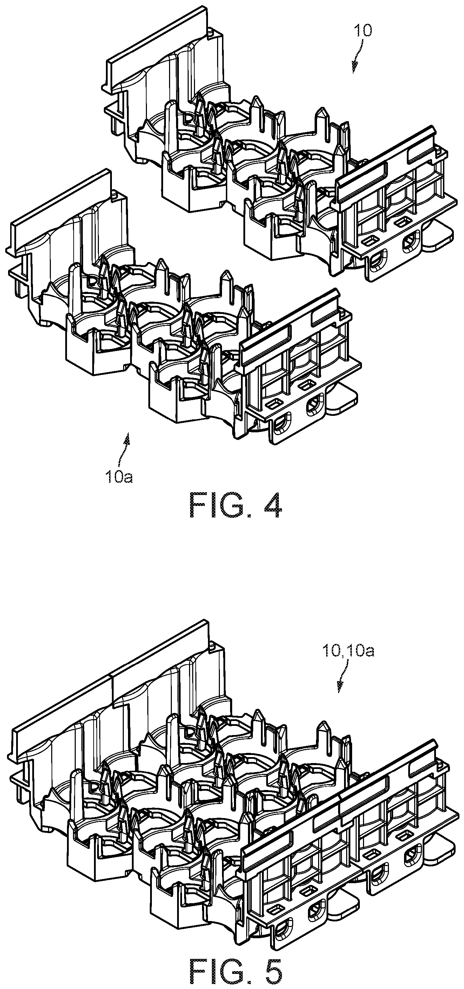

The carrier element 10 is configured so as to be connectable to an adjacent carrier element 10a as illustrated in figures 4 and 5. Connection of adjacent carrier elements 10,10a is achieved by the provision of a plurality of complementary connection formations.

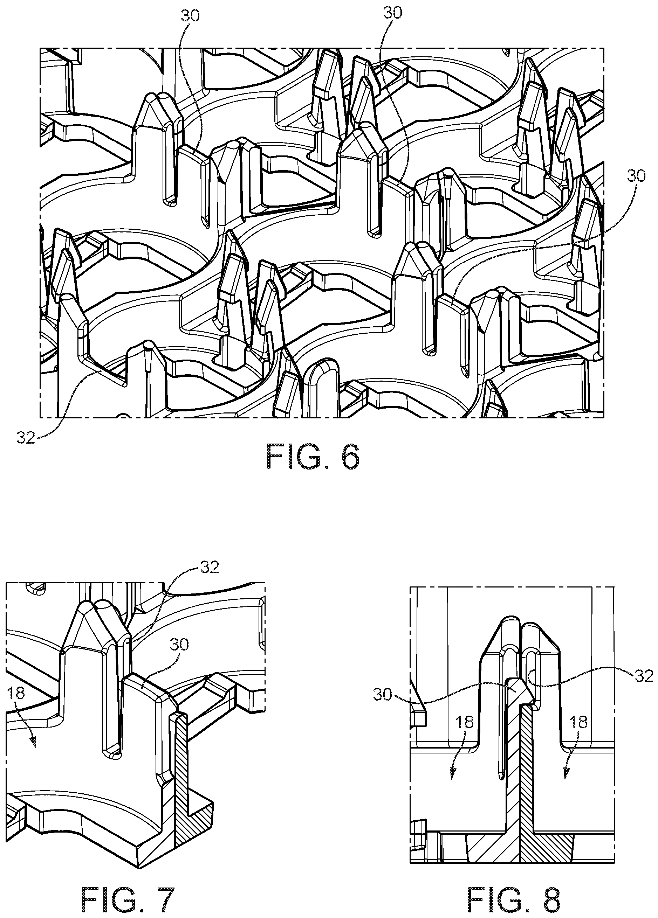

Figures 6 to 8 illustrate a first of the aforementioned connection formations. The central three wells 18 on one side of the carrier element 10 are provided with barbed projections 30. The central three wells 18 on the other side of the carrier element 10 are each provided with a complementarily shaped cut out 32 against which the barbed projections 30 can abut. Depending upon the configuration of the carrier 10, for example the number of cells it is intended to carry it will be under stood that a different number and combination of wells 18 may be utilised for the connection formations.

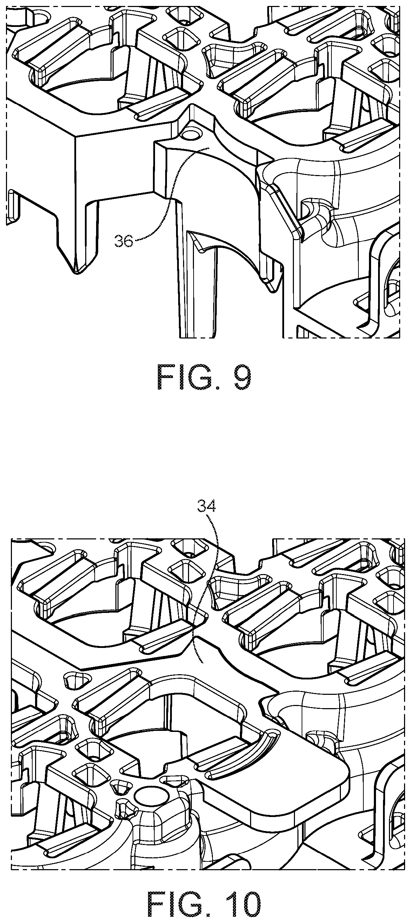

Figures 9 and 10 show a second of the aforementioned connection formations. The central and outer two wells on one side of the carrier element 10 are provided with dovetail projections 34. The central and outer two wells on the other side of the carrier element 10 are provided with complementarily shaped dovetail recesses 36. Depending upon the configuration of the carrier 10, for example the number of cells it is intended to carry it will be under stood that a different number and combination of wells 18 may be utilised for these connection formations.

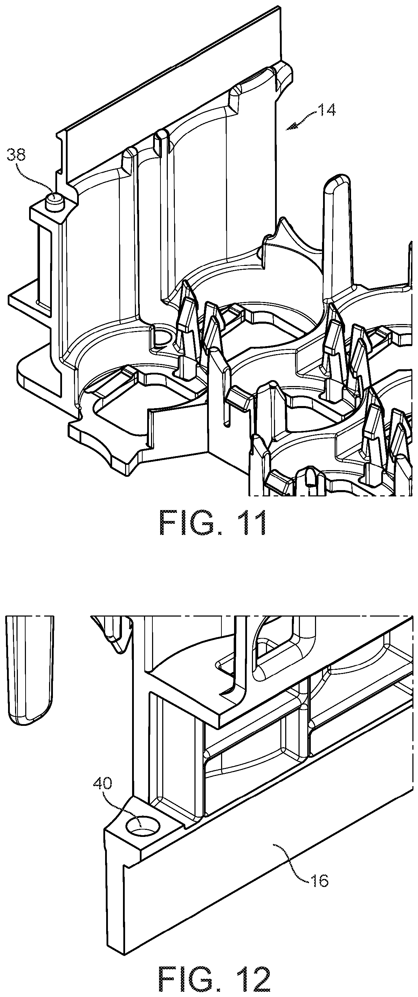

Figures 11 to 13 show a third of the aforementioned connection formations. Each wall 14,16 on one side of the carrier element 10 is provided with a cylindrical projection 38. The walls 14,16 on the opposing side of the carrier element 10 are provided with a complementarily shaped recess 40.

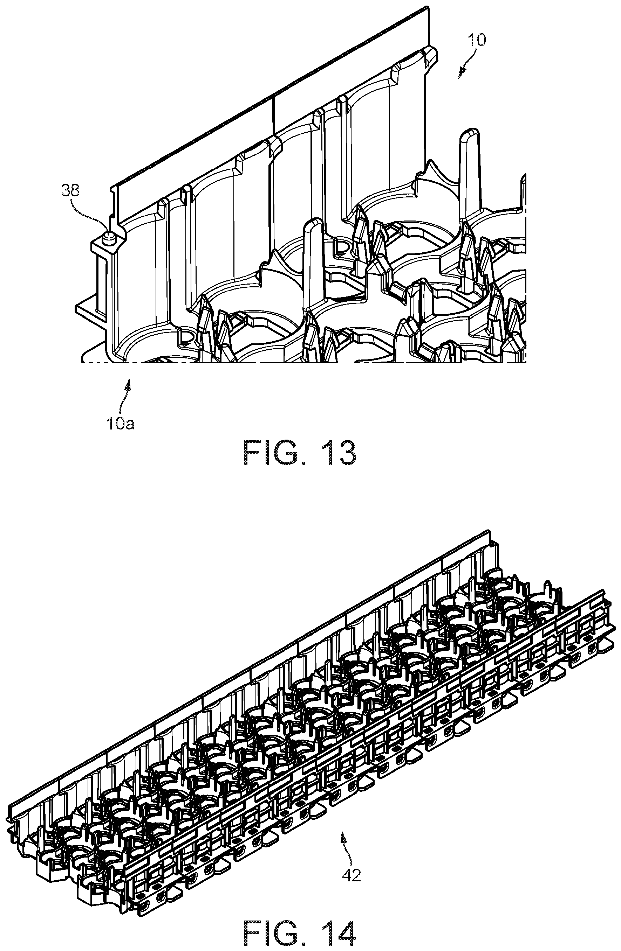

The connection formations may be utilised to connect multiple carrier elements 10 to form a channel or tray 42 as shown in figure 14.

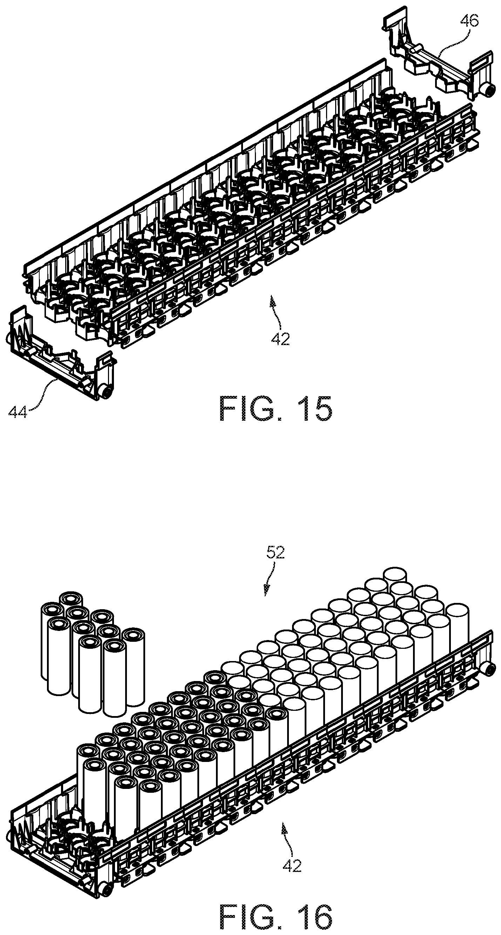

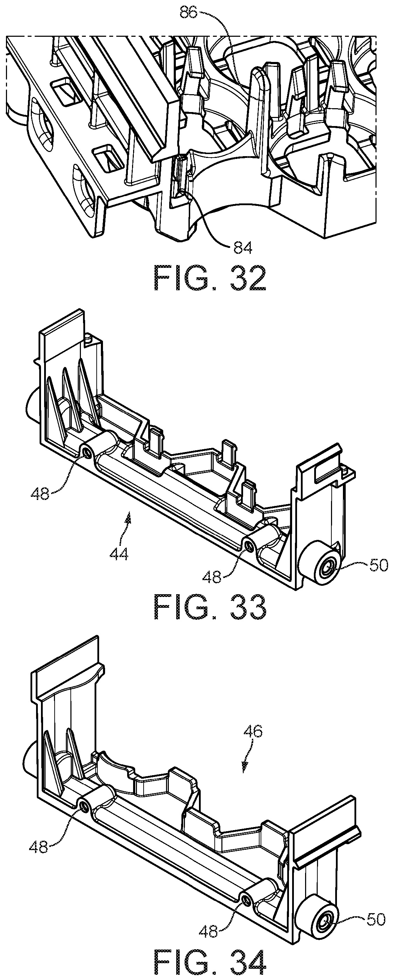

Once the desired length of tray 42 has been assembled, then appropriately configured end pieces 44,46 can be fitted (figure 15). The end pieces 44,46 have appropriately configured features which connect to the previously described connection formations. As shown in figures 33 and 34, the end pieces 44,46 further include connection apertures 48 for a battery cell cooling arrangement (described below) and captive metal inserts 50 to allow mounting of the tray 42 to, for example, other trays 42. It will be appreciated that other features may be used in addition to, or as an alternative to, the captive metal inserts 50 to enable mounting of the trays 42.

In an alternative embodiment, the end pieces 44,46 may be incorporated into carrier elements 10 so as to form end carrier elements.

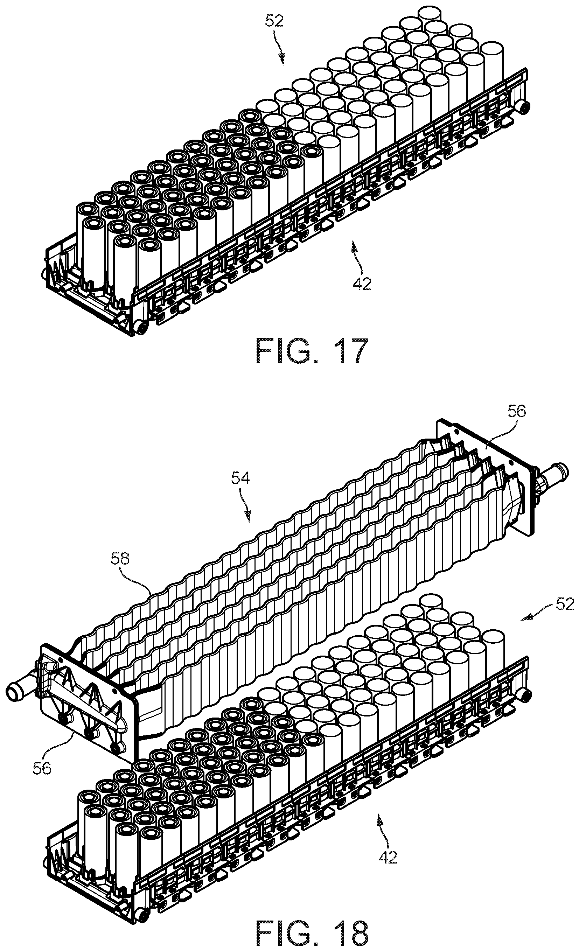

After fitment of the end pieces 44,46, then a plurality of cylindrical battery cells 52 can be fitted to the wells 18 as shown in figures 16 and 17. In the embodiment shown, half of the cells 52 have their cathode uppermost and the other half of the cells have their anode uppermost. This configuration is not intended to be limiting and it will be appreciated that other cell configurations are possible.

Once the cells 52 have been inserted into the wells 18 then, optionally, a cell cooling arrangement 54 may be fitted. The cell cooling arrangement comprises a pair of cooling fluid manifolds 56 between which are connected a plurality of flexible bladders 58. The bladders 58 are fitted between the cells 52 and the manifolds 56 mounted to the connection apertures 48 of the end pieces 44,46. In use, liquid can be circulated through the manifolds 56 and bladders in order to regulate the temperature of the cells 52.

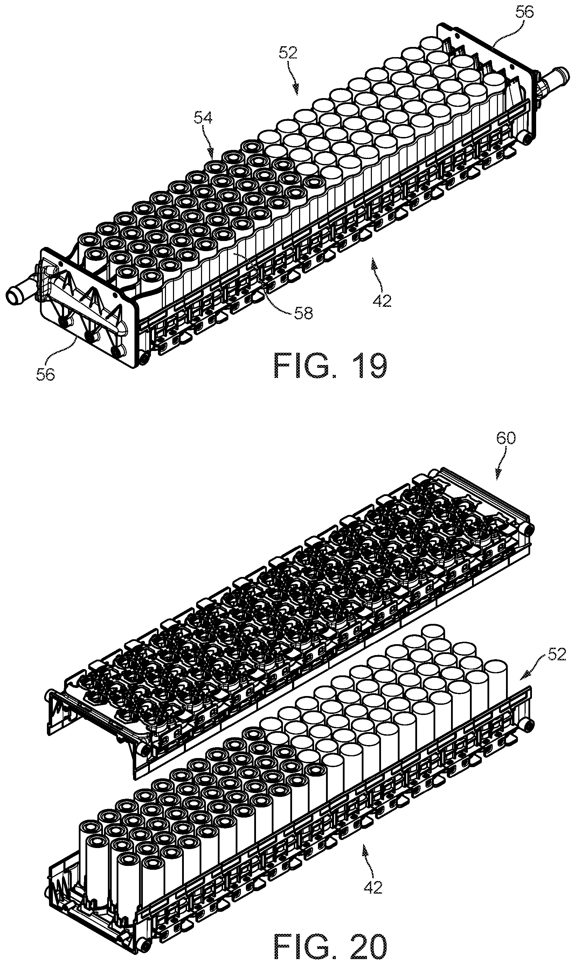

Whether the cell cooling arrangement 54 is included or not, the cells 52 are encapsulated between a second tray 60 of carrier elements 10 as shown in figures 20 to 23

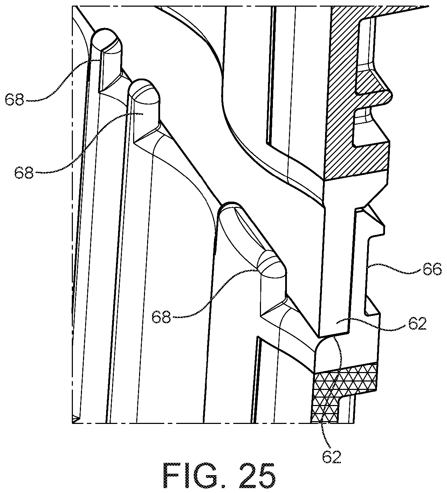

The trays 42, 60 thereafter require connection to one another to define a battery cell carrier generally designated 61. Connection of the trays 42,60 may be effected by a number of means including, for example, adhesive, mechanical fasteners and straps. More preferably the trays 42, 60 may be connected by ultrasonic welding. To assist with such welding, the ends of the walls 14, 16 which are distal to the base 12 of each carrier element 10 are configured to overlap as shown in figures 24 and 25. As can be seen from figures 24 and 25, one of the walls 16 is provided with a ledge 62 against which the distal most edge 64 of the other of the walls 14 abuts when two carrier elements 10, or trays 42, 60, are positioned relative to one another so as to encapsulate a plurality of cells 52. Due to the different configuration of the distal ends of each wall 14, 16, it will be appreciated that the aforementioned overlap occurs on both sides of the carrier element 10 and tray 42,60 pairs.

The wall 16 having the ledge 62 is provided with additional features which assist in the provision of an ultrasonic weld between overlapping carrier elements 10. The wall 16 is provided on the side that is opposite to the wells 18 with a blind recess 66 which is sized to receive the end of an ultrasonic welding apparatus. The ledge 62 is further provided with a plurality of spaced projections 68 which resist movement of the distal most edge 64 of the other of the walls 14 away from the ledge 62 when force is applied to the recess 66 by an ultrasonic welding apparatus.

Electrical connection of the cells 52 within the battery cell carrier 61 is achieved by the provision of external bus bars 70,72,73. Each bus bar 70,72,73 is formed from a planar member 74 of electrically conductive material. Each planar member 74 is provided with a plurality of projections 76 which align with the apertures 20 in each well 18. The projections are configured to contact either the anode or cathode of a battery cell 52 located within a well 18. The projections 76 of each bus bar 70,72.73 may be formed integrally with each planar member 74. As noted above, the location of the sprung fingers 22 in each well 18 ensures that the projections 76 can readily contact the anodes and cathodes of the battery cells.

In an alternative embodiment each bus bar 70,72,73 may be of a laminated construction. In such an embodiment each bus bar 70,72,73 may comprise a first substantially planar member of an electrically conductive material having the projections 76 and a second planar member of an electrically conductive material overlying the first. The first planar member may have a thickness that is less than that of the second planar member so as to assist with formation of the projections 76. The lesser thickness of the first planar member further enables the projections 76 to be formed with a degree of flexibility and resilience. This flexibility and resilience ensures that each projection 76 reliably contacts the anode or cathode of an underlying battery cell 52.

Where the bus bars 70,72,73 are of a laminated construction, then members forming the laminated structure may be connected together, for example by welding.

The projections 76 of the bus bars 70,72,73 may each, in use, be fixed in an electrically conductive manner to the anode or cathode of an underlying battery cell 52. The fixing of the projections 76 may be achieved, for example, by pulsed arc welding or laser welding.

To effect connection of the bus bars 70,72,73 to the battery cell carrier 61, the bus bars 70,72,73 are provided with a plurality of apertures 78 which align with corresponding apertures 80 of the base of each carrier element 10. Mechanical fasteners 82 can then be located through the aligned apertures 78,80 in order to connect the bus bars 70,72,73 to the battery cell carrier 61.

The base 12 of each carrier element 10 is further provided with an aperture 84 through which a temperature sensor (not shown) can be routed. The temperature sensor may be located against a cell 52 or, alternatively, mounted to a dedicated projection 86 of the carrier element 10.

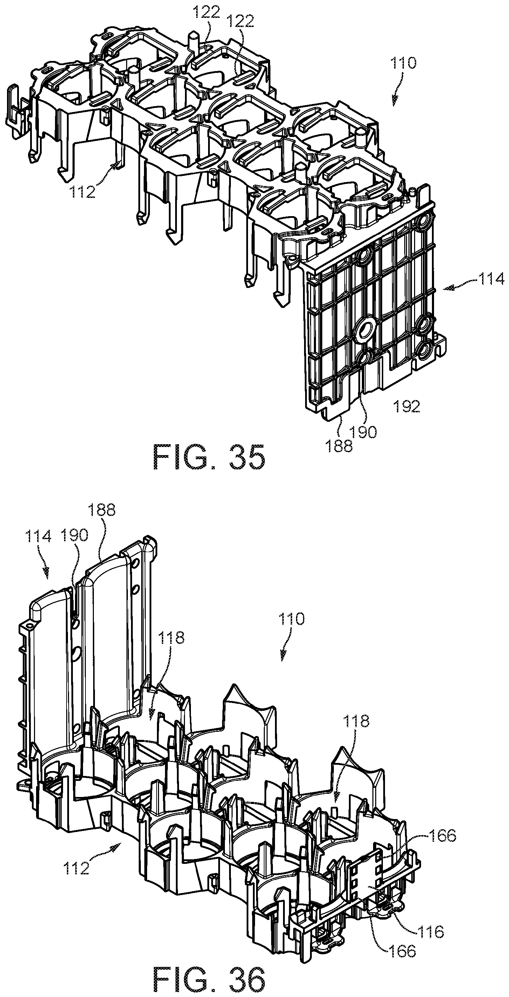

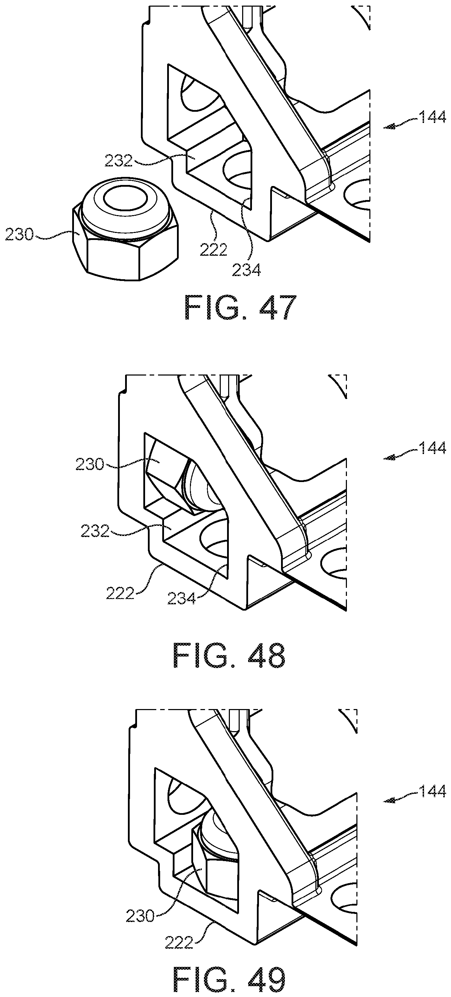

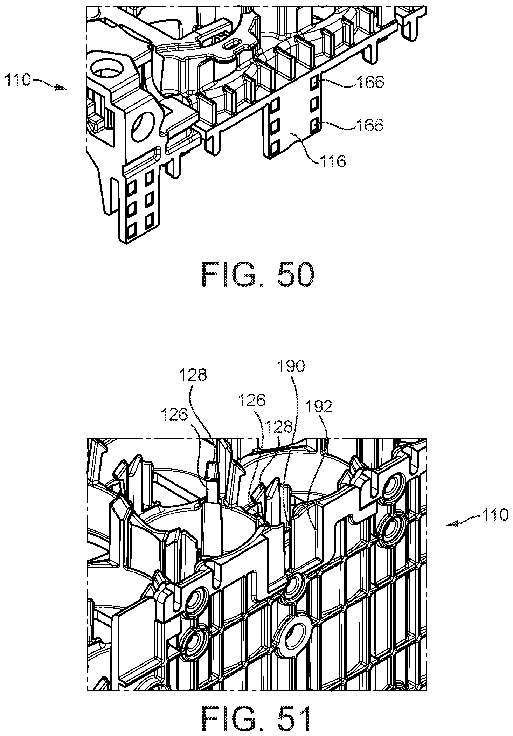

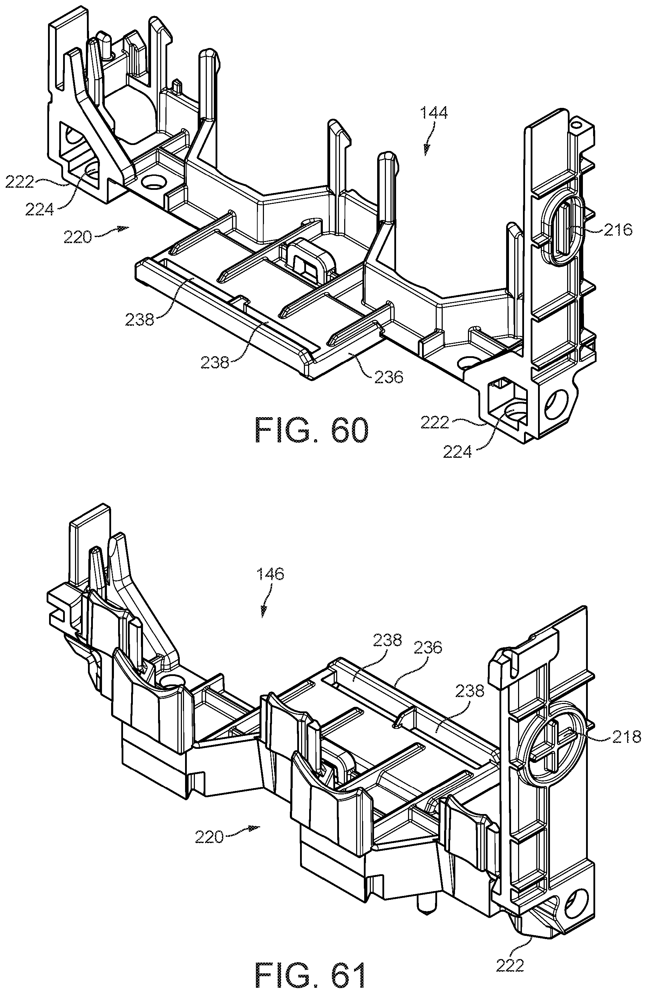

Referring now to figures 35 to 61 there is shown an alternative embodiment of a carrier element generally designated 110. Features common to the embodiment of the invention described with reference to figures 1 to 34 are identified with like reference numerals prefixed with "1". The carrier element 110 has a broadly similar configuration to the carrier element 10 described with reference to figures 1 to 34. More specifically, the manner in which battery cells are positioned and retained in a carrier element 110, and the manner in which adjacent and opposing carrier elements 110 can be fitted together and connected to one another is equivalent to that described with reference to figures 1 to 34. The following description of figures 35 to 61 thus focuses upon features which differ from the carrier element 10 of figures 1 to 34.

Reference is first made to figures 35, 36 and 50 to 54. As before, the carrier element 110 includes a base 112 having a plurality of wells 118 and opposing side walls 114,116. Whereas in the carrier element 10 of figures 1 to 34 is provided with opposing walls 14,16 of substantially equal height and width, the walls 114,116 are dissimilar in size and configuration. The carrier element 110 is provided with a first wall 114 which extends for substantially the entire width of two wells 118 the base 112 and a second wall 116 which has a width that is less than that of the base 112 and first wall 114. The second wall 116 is located at the interface of two wells 118 of the base 112. Furthermore, the first wall 114 extends from the base 112 to a significantly greater height than that of the second wall 116.

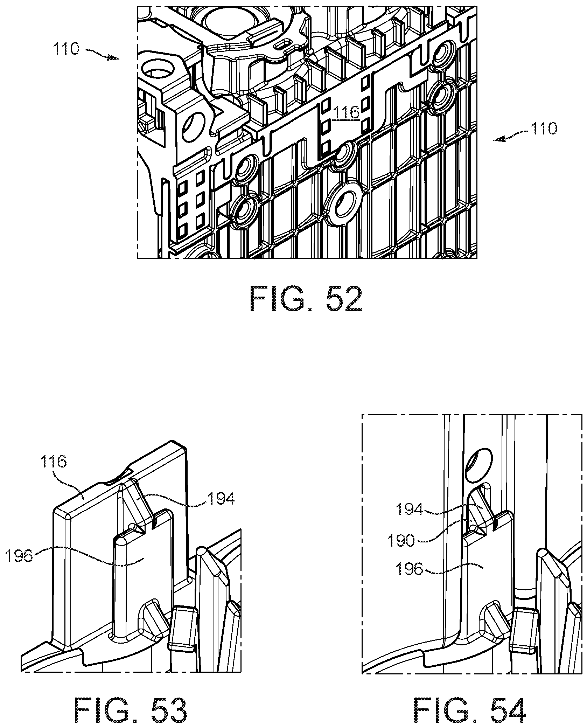

The end 188 of the first wall 114 which is distal to the base 112 is provided with a slot 190 which is surrounded by a recess 192. The recess 192 is sized and shaped to accommodate the second wall 116 of another carrier element 110. The depth of recess 192 is approximately equal to the thickness of the second wall 116. The second wall 116 when received in the recess 192 of a first wall 114 lies flush with the first wall 114 (see figure 52).

As can be seen in figure 53, the second wall 116 is provided with a rib 194 which is connected to a flange 196. The rib 194 extends substantially perpendicular to the plane of the second wall 116. The flange 196 is aligned so as to lie substantially parallel to the plane of the second wall 116. The rib 194 of the second wall 116 is received in the slot 190 of the first wall 114 when two carrier elements 110 are fitted together (see figure 54). The second wall 116 is provided with a plurality of blind recess 166 which, in a similar manner to that described above, are configured to receive the end of an ultrasonic welding apparatus.

The arrangement of rib 194 and recess 192 ensures that, when two carrier members 110 are fitted together as shown in figures 52 and 54, relative axial movement between the carrier members 110 is prevented.

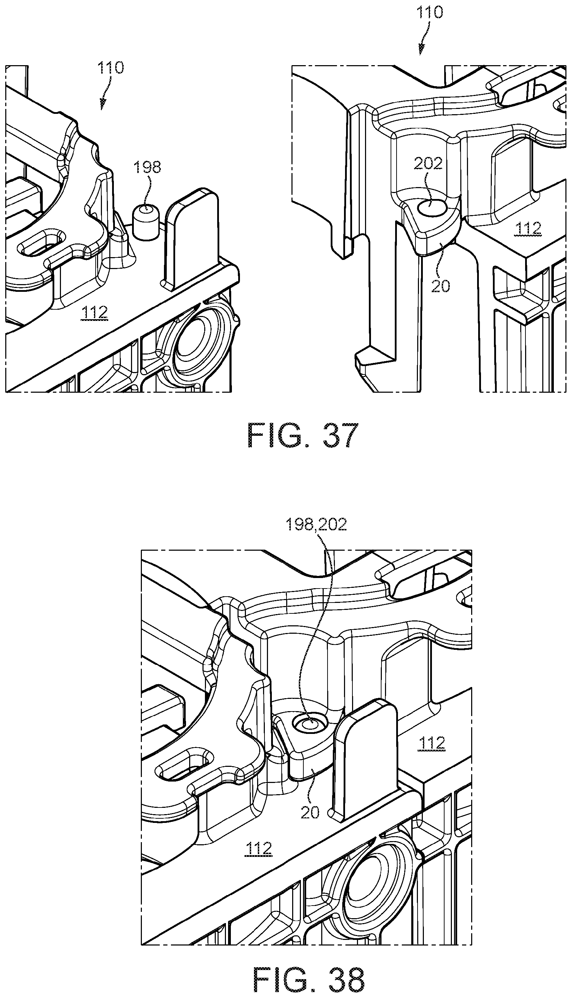

Referring now to figures 37 and 38, there is shown an additional alignment feature of the carrier element 110 which is utilised when adjacent carrier elements 110 are fitted together. On opposing sides of each wall 114,116 the base 112 is provided with an integrally formed pin 198 and a projection 200 having a complementarily shaped hole 202. As can be seen in figure 38 the pin 198 is received in the hole 202 when two adjacent carrier elements 110 are fitted together.

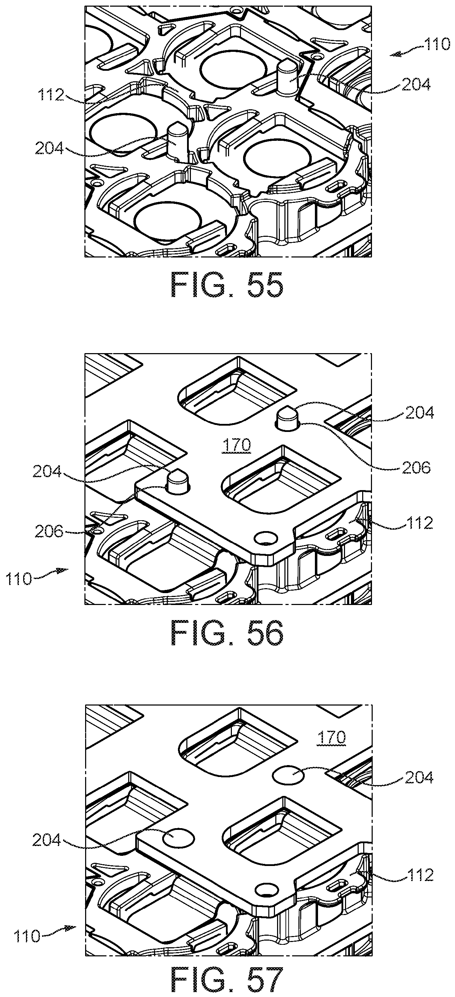

Referring now to figures 55 to 57 a feature of the base 112 of the carrier element 110 is shown. Provided on the opposing side of the base 112 to wells 118 there are integrally formed a plurality of pins 204 which, in use, are utilised to locate and connect a bus bar 170 to the carrier element 110. In use, the pins 204 are received in corresponding apertures 206 of the bus bar 170. The length of each pin 204 is greater than the thickness of the bus bar 170, with the result that the ends of the pins 204 stand proud of the bus bar 170 (see figure 56). The ends of the pins 204 can thereafter be deformed to connect the bus bar 170 to the carrier element 110 (see figure 57).

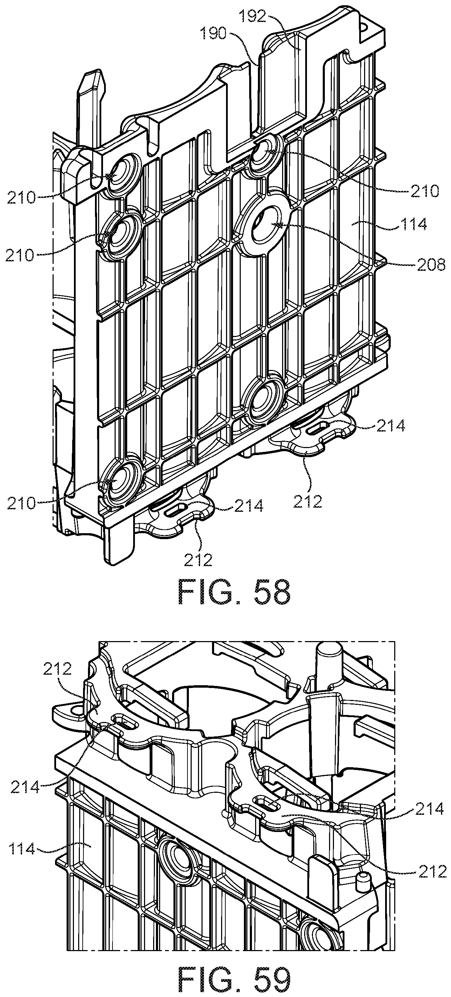

Figure 58 shows further detail of the first wall 114 of the carrier element. More specifically, figure 58 illustrates the presence of through apertures 208,210 in the first wall 114. The larger diameter aperture 208 is configured to receive a mounting stud (not shown) of a structure (for example a vehicle chassis or subassembly) to which a cell carrier formed from a plurality of carrier elements 110 is intended to be mounted. The smaller diameter apertures 210 are configured to receive upstands of one or more printed circuit boards (both not shown).

Figure 59 shows a further detail of the base 112 of the carrier element 110. A lateral extension 212 is provided on each well 118 of the base 112. The extension 212 is provided with an aperture 214 which, in use, can be used to locate a cable retention device (such as a cable tie) to the base 112.

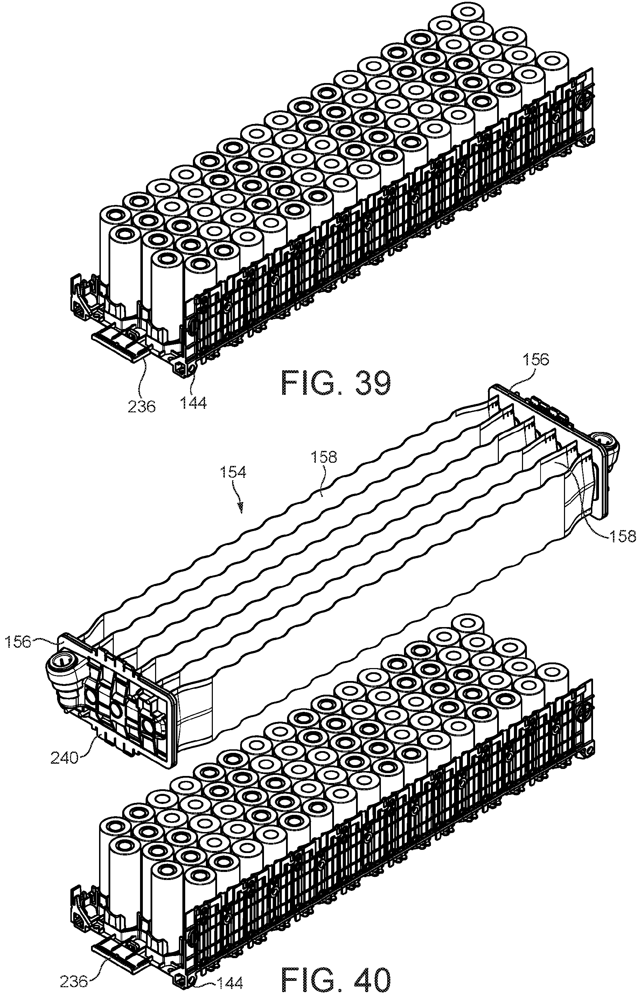

Referring now to figures 39 to 49, 60 and 61, features of the end pieces 144, 146 will now be described. In addition to the features described above in relation to the end pieces 44,46 described with reference to figures 33 and 34, the end pieces 144, 146 are provided with integrally moulded polarity symbols 216, 218.

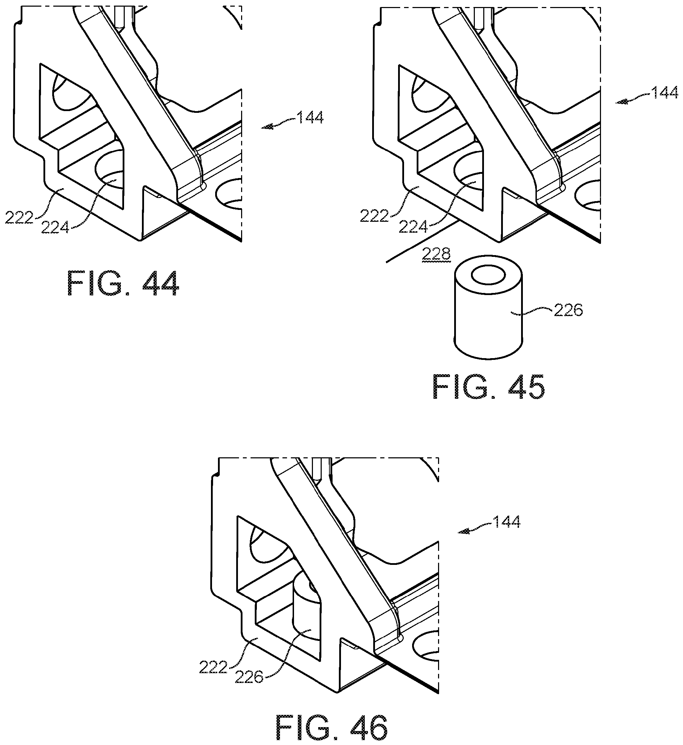

The base 220 of each end piece 144,146 is provided at opposite sides with a foot 222. Each foot 222 is provided with an aperture 224 which, in use, can receive a mounting stud 226 of a surface 228 to which the end piece 144,146 is intended to be mounted (see figures 44 to 46).

Each foot 222 is additionally configured to receive and locate a nut 230 adjacent the aperture 224. The foot 222 is provided with facing surfaces 232,234 which align with corresponding faces of the nut 230 to prevent rotation thereof relative to the end piece 144,146.

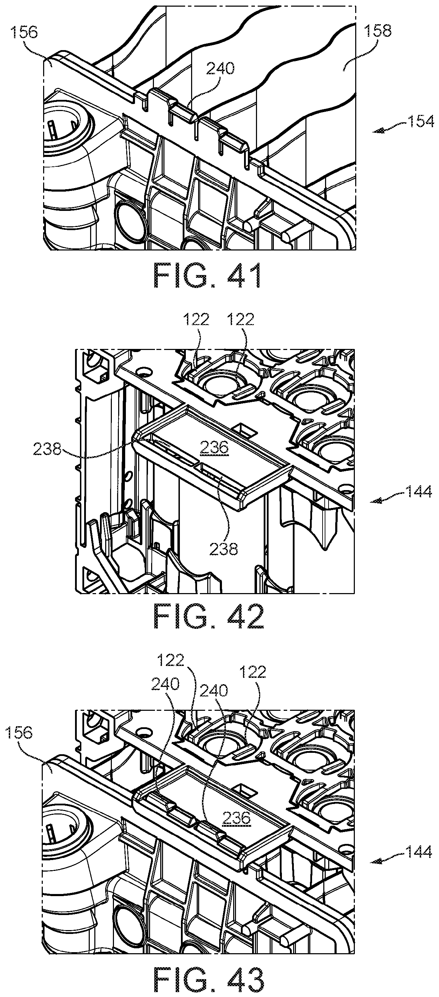

Each end piece 144,146 is additionally provided with a flange 236 which extends from the base 220. The flange 236 is provided with a pair of slots 238. The flanges 236 are provided so as to assist with the retention and location of a cell cooling arrangement 154. As can be seen in, for example, figures 40 and 41, the manifolds 156 of the cell cooling arrangement 154 are provided with barbed projections 240. In use, the barbed projections 240 are received in the slots 238 of the flanges 236 - see figure 43.

It will be understood by the skilled person that features of the carrier element 10 described with reference to figures 1 to 34 may be utilised in connection with the carrier element 110 described with reference to figures 35 to 61. Such utilisation may be either in addition to described features of the carrier element 10 or in substitution for one or more features of the carrier element 10. Similarly, it will be understood by the skilled person that features of the carrier element 110 described with reference to figures 35 to 61 may be utilised in connection with the carrier element 10 described with reference to figures 1 to 34. Such utilisation may be either in addition to described features of the carrier element 110 or in substitution for one or more features of the carrier element 110.

The present invention provides a carrier system, which advantageously may be formed from moulded plastic, that supports and locates multiple small-format cylindrical cells. The cells can be inserted into the carrier in either orientation - anode upwards or cathode upwards - thus permitting any series-parallel configuration, as necessary according to the application.

A carrier for the cells is realised using two identical "clam shell" mouldings or carrier elements that are brought together around the cells and joined to one another to form a substantially closed housing or carrier. Joining of the carrier elements may be achieved by multiple means including ultrasonic welding. Once the two carrier elements are brought together and joined, the resulting carrier is strong and rigid, and gives mechanical support to the battery cells without adhesive or other fasteners.

Into the ends of the carrier are incorporated mounting bosses with metallic inserts. This enables the carrier to require minimum of additional mechanical support when installing it into its final application.

The system of the present invention accommodates a wide variety of cell configurations, and alignment features within the carrier are also designed to accommodate cells from a range of manufacturers - even cells of the notionally "standard" 18650 format have dimensional inconsistencies across the supply chain. The cells are arranged in a package-efficient fashion, but allow for the passage of coolant between them.

The present invention further provides a modular carrier system that can be manufactured in smaller pieces that clip together, giving increased flexibility and faster adaptation to different applications at lower cost. The system utilises a common configuration of carrier element 10,110 that can be connected to similar carrier elements to produce a carrier tray having a desired number of wells to receive battery cells 52.

The splits between the parts are chosen such that the number of unique parts is reduced to a minimum, reducing tooling cost and allowing for re-use of the same "base" parts in a range of configurations for different applications.

The current embodiment allows for 10 cells to be fitted into each carrier piece (5 cells x 2 rows), so modules with any multiple of 10 cells is already achievable (up to a limit of probably 200 cells). The principle is scalable however, and a carrier holding 6 cells (3 cells x 2 rows), 8 cells (4 cells x 2 rows), 15 cells (5 cells x 3 rows) or virtually any other combination is achievable. It will be appreciated that rows defined in the carrier element 10 are staggered so as to reduce the space between adjacent rows of battery cells 52, in use.

The joints between the parts are designed such that they lock together, and once a module is complete (both halves of the carrier brought together and ultrasonically joined) then the component parts cannot come apart, trapping the cells and making the battery module strong and rigid.

## Claims

1. A modular carrier element for a plurality of cylindrical battery cells, the carrier element comprising a base and at least one upstanding wall located on an edge of the base; said at least one wall extending generally perpendicularly with respect to the base; wherein the base is provided with a plurality of open bottomed wells each configured to receive a single cylindrical battery cell, wherein each well is provided with first and second resilient alignment means arranged to bias a cell located within a well in mutually perpendicular directions.

2. A carrier element as claimed in claim 1 wherein the first resilient alignment means is arranged to bias a cell in a direction substantially perpendicular to the plane of the base.

3. A carrier element as claimed in claim 1 or claim 2 wherein the second resilient alignment means is arranged to bias a cell in a direction substantially parallel to the plane of the base.

4. A carrier element as claimed in any preceding claim wherein the first resilient alignment means is formed integrally with the carrier element.

5. A carrier element as claimed in claim 4 wherein the first resilient alignment means comprises a sprung finger located within the open bottom of the well, wherein the sprung finger includes a contact projection which in use, contacts an end of a cell located within the well.

6. A carrier element as claimed in any preceding claim wherein the second resilient alignment means is formed integrally with the carrier element.

7. A carrier element as claimed in claim 6 wherein the second resilient alignment means comprises a sprung finger located at the side of the well, wherein the sprung finger includes a contact projection which in use, contacts a side of a cell located within the well.

8. A carrier element as claimed in any preceding claim wherein the carrier element is provided with formations configured to permit the adjacent connection of like carrier elements.

9. A carrier element as claimed in claim 8 wherein the formations include interengageable projections and recesses of the base of the carrier element.

10. A carrier element as claimed in claim 8 or claim 9 wherein the formations include interengageable projections and recesses of the walls of the carrier element.

11. A carrier element as claimed in any preceding claim wherein the base is provided with two upstanding walls located on opposing edges of the base.

12. A carrier element as clamed in any preceding claim wherein the ends of the walls which are distal to the base are configured to engage walls of a like carrier element when inverted and mated to the carrier element.

13. A carrier element as claimed in any preceding claim wherein the carrier element is of unitary construction.

14. A carrier for a plurality of cylindrical battery cells, the carrier comprising first and second carrier elements as claimed in any preceding claim, wherein the first and second carrier elements are arranged such that the distal ends of the walls of the carriers abut one another and the bases of the carrier elements face one another.

15. A battery arrangement comprising a carrier as claimed in claim 14 and a plurality of cylindrical battery cells, wherein the cylindrical battery cells are located between opposing wells of the first and second carrier elements.

16. A battery arrangement as claimed in claim 15 wherein the first and second carrier elements are connected to one another by welding at an overlap of the walls of the carrier elements.

17. A battery arrangement as claimed in claim 15 wherein the first and second carrier elements are mechanically connected to one another.

18. A battery arrangement as claimed in any of claims 15 to 17 and further comprising a battery cooling arrangement.

19. A battery arrangement as claimed in claim 18 wherein the cooling arrangement comprises at least one flexible bladder passing around at least some of the battery cells, said bladder being in fluid communication with manifold means provided at opposing ends of the bladder.

## Patentansprüche

1. Modulares Trägerelement für eine Mehrzahl von zylindrischen Batteriezellen, das Trägerelement umfassend eine Basis und zumindest eine aufrechtstehende Wand an einer Kante der Basis; wobei sich die zumindest eine Wand allgemein senkrecht zur Basis erstreckt; wobei die Basis mit einer Mehrzahl von Mulden mit offenem Boden versehen ist, die jeweils für die Aufnahme einer einzelnen Batteriezelle ausgebildet sind, wobei jede Mulde mit einem ersten und einem zweiten elastischen Ausrichtungsmittel versehen ist, das angeordnet ist, um eine sich in einer Mulde befindende Zelle in zueinander senkrechten Richtungen vorzuspannen.

2. Trägerelement nach Anspruch 1, wobei das erste elastische Ausrichtungsmittel angeordnet ist zum Vorspannen einer Zelle in einer zur Ebene der Basis im Wesentlichen senkrechten Richtung.

3. Trägerelement nach Anspruch 1 oder Anspruch 2, wobei das zweite elastische Ausrichtungsmittel angeordnet ist zum Vorspannen einer Zelle in einer zur Ebene der Basis im Wesentlichen parallelen Richtung.

4. Trägerelement nach einem der vorangehenden Ansprüche, wobei das erste elastische Ausrichtungsmittel einstückig mit dem Trägerelement ausgebildet ist.

5. Trägerelement nach Anspruch 4, wobei das erste elastische Ausrichtungsmittel einen gefederten Finger in dem offenen Boden der Mulde aufweist, wobei der gefederte Finger einen Kontaktvorsprung hat, der im Einsatz ein Ende einer sich in der Mulde befindenden Zelle kontaktiert.

6. Trägerelement nach einem der vorangehenden Ansprüche, wobei das zweite elastische Ausrichtungsmittel einstückig mit dem Trägerelement ausgebildet ist.

7. Trägerelement nach Anspruch 6, wobei das zweite elastische Ausrichtungsmittel einen gefederten Finger aufweist, der sich an der Seite der Mulde befindet, wobei der gefederte Finger einen Kontaktvorsprung hat, der eine Seite einer sich in der Mulde befindenden Zelle kontaktiert.

8. Trägerelement nach einem der vorangehenden Ansprüche, wobei das Trägerelement mit Ausbildungen versehen ist, die dazu eingerichtet sind, die benachbarte Verbindung von gleichen Elementen zu ermöglichen.

9. Trägerelement nach Anspruch 8, wobei die Ausbildungen miteinander in Eingriff bringbare Vorsprünge und Vertiefungen der Basis des Trägerelements umfassen.

10. Trägerelement nach Anspruch 8 oder Anspruch 9, wobei die Ausbildungen miteinander in Eingriff bringbare Vorsprünge und Vertiefungen der Wände des Trägerelements umfassen.

11. Trägerelement nach einem der vorangehenden Ansprüche, wobei die Basis mit zwei aufrechtstehenden Wänden versehen ist, die sich an einander gegenüberliegenden Kanten der Basis befinden.

12. Trägerelement nach einem der vorangehenden Ansprüche, wobei die zur Basis distalen Enden der Wände derart ausgebildet sind, dass sie in Wände eines gleichen Trägerelements eingreifen, wenn dieses umgedreht und mit dem Trägerelement zusammengepasst wird.

13. Trägerelement nach einem der vorangehenden Ansprüche, wobei das Trägerelement einheitlich ausgebildet ist.

14. Träger für eine Mehrzahl von zylindrischen Batteriezellen, der Träger umfassend ein erstes und ein zweites Trägerelement nach einem der vorangehenden Ansprüche, wobei das erste und das zweite Trägerelement derart angeordnet sind, dass die distalen Enden der Wände der Träger aneinanderstoßen und die Basen der Trägerelemente einander zugewandt sind.

15. Batterieanordnung, umfassend einen Träger nach Anspruch 14 und eine Mehrzahl von zylindrischen Batteriezellen, wobei sich die zylindrischen Batteriezellen zwischen gegenüberliegenden Mulden des ersten und zweiten Trägerelements befinden.

16. Batterieanordnung nach Anspruch 15, wobei das erste und das zweite Trägerelement durch eine Verschweißung an einer Überlappung der Wände der Trägerelemente miteinander verbunden sind.

17. Batterieanordnung nach Anspruch 15, wobei das erste und das zweite Trägerelement mechanisch miteinander verbunden sind.

18. Batterieanordnung nach einem der Ansprüche 15 bis 17, ferner umfassend eine Batterie-Kühlanordnung.

19. Batterieanordnung nach Anspruch 18, wobei die Kühlanordnung zumindest eine flexible Blase umfasst, die zumindest um einige der Batteriezellen herumführt, wobei sich die Blase in Fluidverbindung mit einer Verteilereinrichtung befindet, die an gegenüberliegenden Enden der Blase vorgesehen ist.

## Revendications

1. Un élément de support modulaire pour une pluralité d'éléments de batterie cylindriques, l'élément de support comprenant une base et au moins une paroi dressée placée sur un bord de la base ; ladite au moins paroi s'étendant d'une manière générale perpendiculairement à la base ; dans lequel la base est pourvue d'une pluralité de puits à fond ouvert configurés chacun pour recevoir un seul élément de batterie cylindrique, dans lequel chaque puits est pourvu de premier et deuxième moyens d'alignement élastique agencés pour solliciter un élément placé dans un puits dans des directions mutuellement perpendiculaires.

2. Un élément de support tel que revendiqué à la revendication 1, dans lequel le premier moyen d'alignement élastique est agencé pour solliciter un élément dans une direction sensiblement perpendiculaire au plan de la base.

3. Un élément de support tel que revendiqué dans la revendication 1 ou la revendication 2, dans lequel le deuxième moyen d'alignement élastique est agencé pour solliciter un élément dans une direction sensiblement parallèle au plan de la base.

4. Un élément de support tel que revendiqué dans n'importe quelle revendication précédente, dans lequel le premier moyen d'alignement élastique est formé d'une pièce avec l'élément de support.

5. Un élément de support tel que revendiqué dans la revendication 4, dans lequel le premier moyen d'alignement élastique comprend un doigt à ressort placé dans le fond ouvert du puits, dans lequel le doigt à ressort comprend une saillie de contact qui en utilisation, est en contact avec une extrémité d'un élément placé dans le puits.

6. Un élément de support tel que revendiqué dans n'importe quelle revendication précédente, dans lequel le deuxième moyen d'alignement élastique est formé d'une pièce avec l'élément de support.

7. Un élément de support tel que revendiqué dans la revendication 6, dans lequel le deuxième moyen d'alignement élastique comprend un doigt à ressort placé au côté du puits, dans lequel le doigt à ressort comprend une saillie de contact qui en utilisation, est en contact avec un côté d'un élément placé dans le puits.

8. Un élément de support tel que revendiqué dans n'importe quelle revendication précédente, dans lequel l'élément de support est pourvu de conformations configurées pour permettre la liaison contigüe de mêmes éléments de support.

9. Un élément de support tel que revendiqué dans la revendication 8, dans lequel les conformations comprennent des saillies et des creux pouvant s'interpénétrer de la base de l'élément de support.

10. Un élément de support tel que revendiqué dans la revendication 8 ou la revendication 9, dans lequel les conformations comprennent des saillies et des creux pouvant s'interpénétrer des parois de l'élément de support.

11. Un élément de support tel que revendiqué dans n'importe quelle revendication précédente, dans lequel la base est pourvue de deux parois dressées placées sur des bords opposés de la base.

12. Un élément de support tel que revendiqué dans n'importe quelle revendication précédente, dans lequel les extrémités des parois, qui sont à distance de la base, sont configurées pour pénétrer dans des parois d'un élément de support analogue, lorsqu'il est inversé et conjugué de l'élément de support.

13. Un élément de support tel que revendiqué dans n'importe quelle revendication précédente, dans lequel l'élément de support est d'une construction unitaire.

14. Un support d'une pluralité d'éléments de batterie cylindriques, le support comprenant des premier et deuxième éléments de support tel que revendiqué dans n'importe quelle revendication précédente, dans lequel les premier et deuxième éléments de support sont disposés de manière à ce que les extrémités distales des parois des supports viennent en butée l'une contre l'autre et de manière à ce que les bases des éléments de support soient en face l'une de l'autre.

15. Un agencement de batterie comprenant un support tel que revendiqué dans la revendication 14 et une pluralité d'éléments de batterie cylindriques, dans lequel les éléments de batterie cylindriques sont placés entre des parois opposées des premier et deuxième éléments de support.

16. Un agencement de batterie tel que revendiqué à la revendication 15, dans lequel les premier et deuxième éléments de support sont reliés l'un à l'autre par soudage à un chevauchement des parois des éléments de support.

17. Un agencement de batterie tel que revendiqué à la revendication 15, dans lequel les premier et deuxième éléments de support sont reliés mécaniquement l'un à l'autre.

18. Un agencement de batterie tel que revendiqué dans l'une quelconque des revendications 15 à 17 et comprenant en outre un agencement de refroidissement de la batterie.

19. Un agencement de batterie tel que revendiqué dans la revendication 18, dans lequel l'agencement de refroidissement comprend au moins une vessie souple passant autour d'au moins certains des éléments de la batterie, ladite vessie étant en communication fluidique avec des moyens collecteurs prévus à des extrémités opposées de la vessie.
